# EUROPÄISCHE PATENTSCHRIFT

(11) **EP 2 160 537 B1**
(45) Veröffentlichungstag und Bekanntmachung des Hinweises auf die Patenterteilung: **28.11.2012**
(21) Anmeldenummer: 08773421.6
(22) Anmeldetag: 13.06.2008
(51) Int. Cl.: F16L 37/092, F16L 37/098, F16L 33/22

(54) **LÖSBARE PNEUMATISCHE VERBINDUNG**
DETACHABLE PNEUMATIC CONNECTION
RACCORD PNEUMATIQUE DETACHABLE

(30) Priorität: 13.06.2007 DE 102007027148
(43) Veröffentlichungstag der Anmeldung: 10.03.2010
(73) Patentinhaber: KNORR-BREMSE Systeme für Nutzfahrzeuge GmbH, 80809 München (DE)
(72) Erfinder: KLEIN, Günter, 72669 Unterensingen (DE)
(74) Vertreter: Schönmann, Kurt
(86) Internationale Anmeldenummer: PCT/EP2008/004745
(87) Internationale Veröffentlichungsnummer: WO 2008/151809

(56) Entgegenhaltungen:
- EP-A- 0 333 094
- EP-A- 0 810 399
- DE-A1- 2 534 956
- US-A- 4 685 706

## Beschreibung

Die Erfindung geht aus von einer lösbaren pneumatischen Rohr- oder Schlauchverbindung gemäß dem Oberbegriff von Anspruch 1.

Aus dem Stand der Technik sind sog. push-to-connect-Verbindungen bekannt, bei welchen ein Rohr oder ein Schlauch in eine Aufnahmebohrung gesteckt und durch axiale Bewegung der in der Aufnahmebohrung gehaltenen Klemmhülse reibschlüssig- und/oder formschlüssig geklemmt werden. Dabei ist der radial innere Keilabschnitt an einem separaten Bauteil in Form einer Hülse ausgebildet, welche in der Regel in die Aufnahmebohrung eingeschraubt oder eingepresst ist. Die Klemmhülse erfüllt in vorteilhafter Weise eine Doppelfunktion, indem sie zum einen das Rohr oder den Schlauch mit ihrer radial inneren Umfangsfläche führt, wenn der Schlauch oder das Rohr axial bewegt wird und zum andern klemmt sie den Schlauch oder das Rohr abhängig von ihrer Axialposition relativ zur Aufnahmebohrung bzw. zu deren radial innerem Keilabschnitt.

Eine gattungsgemäße Verbindung ist in DE 25 34 956 A1, EP 0 333 094 A1, US-A-4 685 706 offenbart. Dabei ist zwischen einer radial inneren Umfangsfläche der Aufnahmebohrung und einer radial äußeren Umfangsfläche des Rohres oder des Schlauchs wenigstens ein einer Stirnfläche der Klemmhülse gegenüber liegender Dichtring vorgesehen ist. Dadurch muss der Dichtring von außen in einen durch den radial inneren Keilabschnitt gebildeten hinterschnittenen Querschnitt eingesetzt werden, wobei Lagefehler des Dichtrings auftreten können, welche die Dichtigkeit beeinträchtigen können. Weiterhin weist die Klemmhülse an einem aus der Aufnahmebohrung heraus ragenden Abschnitt einen sich nach radial außen erstreckenden Kragen auf. Der Kragen ist mit der Klemmhülse einstückig ausgeführt, wodurch die Klemmfinger der Klemmhülse beim Einsetzen der Klemmhülse in die Bohrung elastisch verformt werden müssen. Wegen der begrenzten Elastizität solcher Klemmfinder ist aber der Winkel des an den Klemmfingern ausgebildeten radial äußeren Klemmabschnitts beschränkt, denn bei großen Keilwinkeln wird auch der Biegegrad der Klemmfinger entsprechend groß, wobei deren Material durch übermäßige Biegung geschädigt werden kann, wodurch ihre Haltefunktion gegenüber dem Rohr oder Schlauch beeinträchtigt wird.

Der Erfindung liegt demgegenüber die Aufgabe zugrunde, eine lösbare pneumatische Verbindung der eingangs erwähnten Art derart weiter zu verbessern.

Erfindungsgemäß wird diese Aufgabe durch die Merkmale des Patentanspruchs 1 gelöst.

### Offenbarung der Erfindung

Der radial innere Keilabschnitt ist direkt an eine Bohrungswand der Aufnahmebohrung angeformt und mit ihr einstückig ausgeführt. Dann kann ein separates Bauteil, an welchem der innere Keilabschnitt ausgebildet ist, entfallen wie auch der Fertigungsschritt, dieses Bauteil mit der Aufnahmebohrung zu verschrauben bzw. in diese einzupressen. Weil dann auch kein Platz mehr zum Ansetzen eines Schraubwerkzeugs für dieses separate Bauteil berücksichtigt werden muss, können pneumatische Verbindungen axial näher zueinander positioniert werden, was eine kompaktere Bauform bedingt.

Die Klemmhülse erfüllt in vorteilhafter Weise eine Doppelfunktion, indem sie zum einen das Rohr oder den Schlauch mit ihrer radial inneren Umfangsfläche führt, wenn der Schlauch oder das Rohr axial bewegt wird und zum andern klemmt sie den Schlauch oder das Rohr abhängig von ihrer Axialposition relativ zur Aufnahmebohrung bzw. zu deren radial innerem Keilabschnitt.

Gemäß der Erfindung wird vorgeschlagen, dass
- der Dichtring durch eine in die Aufnahmebohrung eingesetzte Hülse gekontert ist, und
- der Kragen mit der Klemmhülse lösbar verbunden ist.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt ist die Klemmhülse in Axialrichtung gesehen geschlitzt, um die radiale Elastizität zu erzeugen.

Gemäß einer Weiterbildung kann der mit der Aufnahmebohrung versehene Körper durch ein Druckluftgerät gebildet werden, beispielsweise durch ein Druckregelmodul zum Druckaufbau, Druckhalten oder Druckabbau eines Bremsdrucks einer elektropneumatischen Bremsanlage eines Kraftfahrzeugs. Der Schlauch oder das Rohr dient dann zur Zufuhr oder Abfuhr zu dem bzw. aus dem Druckregelmodul.

### Zeichnung

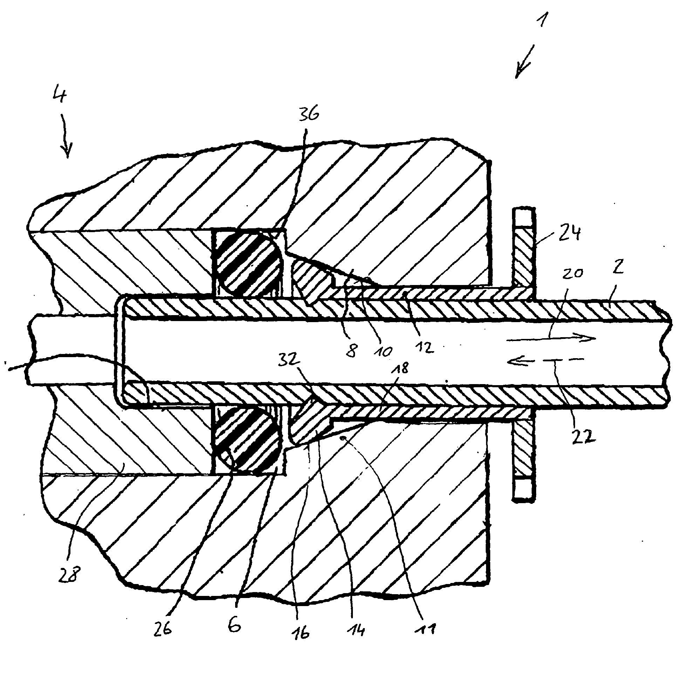

Ein Ausführungsbeispiel der Erfindung ist in der Zeichnung dargestellt und in der nachfolgenden Beschreibung näher erläutert. In der Zeichnung zeigt die einzige Figur eine Querschnittsdarstellung einer lösbaren pneumatischen Verbindung gemäß einer bevorzugten Ausführungsform der Erfindung.

### Beschreibung des Ausführungsbeispiels

In der Figur ist ein bevorzugtes Ausführungsbeispiel einer lösbaren pneumatischen Verbindung 1 zwischen einem beispielsweise elastischen Rohr oder Schlauch 2 und einem Druckluftgerät 4 wie beispielsweise einem Druckregelmodul eines elektropneumatischen Bremssystems dargestellt. Das Druckluftgerät 4 hat eine Aufnahmebohrung 6 für das Rohr 2, welche einen radial inneren Keilabschnitt 8 aufweist. Dieser radial innere Keilabschnitt 8 und insbesondere eine Keilfläche 10 dieses Keilabschnitts 8 ist direkt an einer Bohrungswand 11 der Aufnahmebohrung 6 angeformt und mit ihr einstückig ausgeführt.

Darüber hinaus ist eine den Schlauch oder das Rohr 2 umgebende, zumindest teilweise radial elastische Klemmhülse 12 vorhanden, welche einen radial äußeren Keilabschnitt 14 mit entsprechender Keilfläche 16 aufweist. Besonders bevorzugt ist die Klemmhülse 12 in Axialrichtung gesehen geschlitzt, d.h. es sind sich in Axialrichtung erstreckende, frei auskragende Klemmfinger 18 ausgebildet, um eine radiale Elastizität zu erzeugen. Abweichend von dem radial inneren Keilabschnitt 8 ist die Aufnahmebohrung 6 endseitig glattzylindrisch ausgebildet mit einem Durchmesser, welcher eine lineare Führung der Klemmhülse 12 in Axialrichtung erlaubt.

Der radial äußere Keilabschnitt 14 der Klemmhülse 12 wirkt mit dem radial inneren Keilabschnitt 8 der Aufnahmebohrung 6 derart zusammen, dass durch eine axiale Bewegung der Klemmhülse 12 in einer durch einen mit durchgezogener Linie gezeichneten Pfeil 20 gekennzeichneten Richtung die Keilabschnitte 8, 14 gegeneinander verspannt und die Klemmhülse und insbesondere deren Klemmfinger 18 dadurch nach radial innen elastisch verformt werden, um das Rohr oder den Schlauch 2 reib- und/oder formschlüssig zu klemmen und dass durch eine axiale Bewegung der Klemmhülse 12 in einer durch einen mit gestrichelter Linie gezeichneten Pfeil 22 gekennzeichneten Gegenrichtung die Keilabschnitte 8, 14 voneinander wegbewegt bzw. außer Eingriff gebracht werden und die Klemmhülse 12 und insbesondere deren Klemmfinger 18 dadurch nach radial außen elastisch rückverformt werden, um die Klemmung des Rohres oder des Schlauches 2 in der Aufnahmebohrung 6 aufzuheben.

Die Klemmhülse 12 weist an einem aus der Aufnahmebohrung 6 heraus ragenden Abschnitt erfindungsgemäss einen sich nach radial außen erstreckenden Kragen 24 auf. Dieser Kragen 24 ist ein separates Bauteil und bevorzugt auf das freie Ende der Klemmhülse 12 aufgeschraubt. Dann kann die Klemmhülse 12 durch Angriff eines Werkzeugs oder einer Hand an dem Kragen 24 leicht in axialer Richtung bewegt werden, um die pneumatische Verbindung 1 herzustellen oder um sie zu lösen. Ein axialer Anschlag für die Klemmhülse 12 wird dann durch die beiden sich kontaktierenden Keilabschnitte 8, 14 gebildet, wenn die pneumatische Verbindung 1 hergestellt wird.

Erfindungsgemäß ist zwischen einer radial inneren Umfangsfläche der Aufnahmebohrung 6 und einer radial äußeren Umfangsfläche des Rohres oder des Schlauchs 2 wenigstens ein einer Stirnfläche der Klemmhülse 12 gegenüber liegender Dichtring 26 vorgesehen. Dieser Dichtring 26 sorgt für eine druckdichte Abdichtung des Inneren der Aufnahmebohrung 6 gegenüber der Umgebung. Der Dichtring 26 ist erfindungsgemäss einerseits gegen eine Hülse 28 gekontert, welche in einen glattzylindrischen Abschnitt 36 der Aufnahmebohrung 6 beispielsweise über eine Verschraubung eingesetzt ist. Diese Hülse 28 weist an ihrem zum Rohr oder Schlauch 2 weisenden Ende eine radial innere ringförmige Ausnehmung 30 auf, deren Stirnfläche einen Anschlag für das Rohr oder den Schlauch 2 bildet. Dieser Dichtring 26 bildet zugleich den anderen axialen Anschlag für eine Endposition der Klemmhülse 12 beim Lösen der pneumatischen Verbindung 1.

Nicht zuletzt kann die Klemmhülse 12 bevorzugt im Bereich der Klemmfinger 18 wenigstens einen nach radial innen ragenden Vorsprung 32 aufweisen, bevorzugt in Form einer oder mehrerer Schneiden 34, damit bei der durch die Axialbewegung der Klemmhülse 12 und der dann gegeneinander verspannten Keilabschnitte 8, 14 hervorgerufenen Bewegung der Klemmfinger 18 nach radial innen nicht nur ein Reibschluss zwischen den Klemmfingern 18 und dem Rohr oder Schlauch 2 erzeugt wird, sondern darüber hinaus auch ein Formschluss, wenn die Schneide 34 in das elastische Kunststoffmaterial des Rohres oder des Schlauches 2 eindringt. Durch die elastizitätsbedingte Verspannung der Keilabschnitte 8, 14 gegeneinander und der dadurch erzeugten Haftreibung wird die Klemmhülse 12 in ihrer axialen Position gehalten.

Zur Fertigung der pneumatischen Verbindung 1 wird zunächst die Aufnahmebohrung 6 für das Rohr oder den Schlauch 2 in dem Druckluftgerät 4 und insbesondere der radial innere Keilabschnitt 8 beispielsweise spanend gefertigt. Der von dem Keilabschnitt 8 abweichende Abschnitt 36 der Aufnahmebohrung 6 wird vorzugsweise glattzylindrisch ausgebildet.

Von der Innenseite des Druckluftgeräts 4 wird dann die Klemmhülse 12 eingesetzt und auf ihr aus der Aufnahmebohrung 6 nach außen ragendes Ende der Kragen 24 aufgeschraubt. In den glattzylindrischen Abschnitt 36 der Aufnahmebohrung 6 wird dann der Dichtring 26, vorzugsweise in Form eines O-Rings eingesetzt sowie nachfolgend die Hülse 28.

Abweichend von der beschriebenen Ausführungsform können zusätzliche Dicht - oder Schmutzabstreifringe vorgesehen sein. Weiterhin könnten in der Aufnahmebohrung 6, in der Klemmhülse 12 oder in den Dicht- oder Schmutzabstreifringen 26 definierte Durchgänge derart ausgebildet sein, dass eine Luftströmung entsteht, welche einen hörbaren Ton erzeugt, welcher auf Undichtigkeiten hinweist. Darüber hinaus ist auch eine Mehrfachklemmung denkbar mit mehreren axial hintereinander angeordneten Keilabschnitten 8, 14, wobei an jedem Keilabschnitt 8, 14 ein Reibschluss bzw. Formschluss zwischen der Klemmhülse 12 und dem Rohr oder Schlauch 2 erzeugt wird. Ebenso ist denkbar, den oder die Dichtringe 26 anstatt von einem Innenraum des Druckluftgeräts 4 gesehen vor der Klemmhülse 12 hinter dieser anzuordnen. Weiterhin könnte eine spürbare Rückmeldung bezüglich einer ordnungsgemäßen pneumatischen Verbindung 1 zwischen dem Rohr oder Schlauch 2 und dem Druckluftgerät 4 dadurch erfolgen, dass eine lösbare Verrastung der Klemmhülse 12 in der Aufnahmebohrung 6 stattfindet.

Nicht zuletzt kann die erfindungsgemäße pneumatische Verbindung 1 auch zwischen zwei Rohren oder Schläuchen 2 ausgebildet sein, wenn eine entsprechende Aufnahmebohrung 6 mit Klemmhülse 12 an einem Ende des einen Rohres oder Schlauches 2 beispielsweise in Form eines Adapters vorhanden ist.

### Bezugszahlenliste

- 1: Verbindung
- 2: Rohr
- 4: Druckluftgerät
- 6: Aufnahmebohrung
- 8: Keilabschnitt
- 10: Keilfläche
- 11: Bohrungswand
- 12: Klemmhülse
- 14: Keilabschnitt
- 16: Keilfläche
- 18: Klemmfinger
- 20: Pfeil
- 22: Pfeil
- 24: Kragen
- 26: Dichtring
- 28: Hülse
- 30: Ausnehmung
- 32: Vorsprung
- 34: Schneide
- 36: Abschnitt

## Patentansprüche

1. Lösbare pneumatische Rohr- oder Schlauchverbindung (1) umfassend :
a) Einen druckluftführenden Körper (4) mit einer Aufnahmebohrung (6) für einen druckluftführenden Schlauch oder ein druckluftführendes Rohr (2), wobei die Aufnahmebohrung (6) einen radial inneren Keilabschnitt (8) aufweist,
b) eine den Schlauch oder das Rohr (2) umgebende, zumindest teilweise radial elastische Klemmhülse (12), welche einen radial äußeren Keilabschnitt (14) aufweist, wobei
c) der radial äußere Keilabschnitt (14) der Klemmhülse (12) mit dem radial inneren Keilabschnitt (8) der Aufnahmebohrung (6) derart zusammenwirkt, dass durch eine axiale Bewegung der Klemmhülse (12) in einer Richtung die Keilabschnitte (8, 14) gegeneinander verspannbar sind und die Klemmhülse (12) dadurch zumindest teilweise nach radial innen elastisch verformt wird, um das Rohr oder den Schlauch (2) reib- und/oder formschlüssig zu klemmen und dass durch eine axiale Bewegung der Klemmhülse (12) in der Gegenrichtung die Keilabschnitte (8, 14) voneinander wegbewegbar sind und die Klemmhülse (12) dadurch nach radial außen elastisch rückverformt wird, um die Klemmung des Rohres oder des Schlauches (2) in der Aufnahmebohrung (6) aufzuheben,
d) der radial innere Keilabschnitt (8) direkt an eine Bohrungswand (11) der Aufnahmebohrung (6) angeformt und mit ihr einstückig ausgeführt ist,
e) zwischen einer radial inneren Umfangsfläche (36) der Aufnahmebohrung (6) und einer radial äußeren Umfangsfläche des Rohres oder des Schlauchs (2) wenigstens ein einer Stirnfläche der Klemmhülse (12) gegenüber liegender Dichtring (26) vorgesehen ist,
f) die Klemmhülse (12) an einem aus der Aufnahmebohrung (6) heraus ragenden Abschnitt einen sich nach radial außen erstreckenden Kragen (24) aufweist,
**dadurch gekennzeichnet, dass**
g) der Dichtring (26) durch eine in die Aufnahmebohrung (6) eingesetzte Hülse (28) gekontert ist, und
h) der Kragen (24) mit der Klemmhülse (12) lösbar verbunden ist.

2. Lösbare pneumatische Rohr- oder Schlauchverbindung nach Anspruch 1, **dadurch gekennzeichnet, dass** die Klemmhülse (12) in Axialrichtung gesehen geschlitzt ist.

3. Lösbare pneumatische Rohr- oder Schlauchverbindung nach Anspruch 2, **dadurch gekennzeichnet, dass** die Klemmhülse sich in axialer Richtung erstreckende, frei auskragende Klemmfinger (18) aufweist.

4. Lösbare pneumatische Rohr- oder Schlauchverbindung nach wenigstens einem der vorhergehenden Ansprüche, **dadurch gekennzeichnet, dass** der mit der Aufnahmebohrung (6) versehene druckluftführende Körper durch ein Druckluftgerät (4) gebildet wird.

5. Lösbare pneumatische Rohr- oder Schlauchverbindung nach wenigstens einem der vorhergehenden Ansprüche, **dadurch gekennzeichnet, dass** eine lösbare Verrastung zwischen der Klemmhülse (12) und der Bohrungswand (11) der Aufnahmebohrung (6) vorgesehen ist.

6. Lösbare pneumatische Rohr- oder Schlauchverbindung nach wenigstens einem der vorhergehenden Ansprüche, **dadurch gekennzeichnet, dass** in der Aufnahmebohrung (6) und/oder in der Klemmhülse 12 oder in dem Dichtring (26) definierte Durchgänge derart ausgebildet sind, dass eine Luftströmung entsteht, welche einen hörbaren Ton erzeugt, welcher auf Undichtigkeiten hinweist.

7. Lösbare pneumatische Rohr- oder Schlauchverbindung nach wenigstens einem der vorhergehenden Ansprüche, **dadurch gekennzeichnet, dass** die Hülse (28) an ihrem zum Rohr oder Schlauch (2) weisenden Ende eine radial innere ringförmige Ausnehmung (30) aufweist, deren Stirnfläche einen Anschlag für das Rohr oder den Schlauch (2) bildet.

8. Lösbare pneumatische Rohr- oder Schlauchverbindung nach Anspruch 9, **dadurch gekennzeichnet, dass** die Hülse (28) in einen glattzylindrischen Abschnitt (36) der Aufnahmebohrung über eine Verschraubung eingesetzt ist.

## Claims

1. Detachable pneumatic pipe or hose connection (1) comprising:
a) a compressed-air-carrying body (4) with an accommodating bore (6) for a compressed air-carrying hose or a compressed air-carrying pipe (2), the accommodating bore (6) having a radially inner wedge section (8),
b) an at least partially radially elastic clamping collet (12) which surrounds the hose or the pipe (2) and which has a radially outer wedge section (14), wherein
c) the radially outer wedge section (14) of the clamping collet (12) interacts with the radially inner wedge section (8) of the accommodating bore (6) in such a manner that, by an axial movement of the clamping collet (12) in one direction, the wedge sections (8, 14) can be braced against one another, and the clamping collet (12) is thereby elastically deformed, at least partially, radially inward in order to clamp the pipe or the hose (2) frictionally and/or positively and in such a manner that, by an axial movement of the clamping collet (12) in the opposite direction, the wedge sections (8, 14) can be moved away from one another, and the clamping collet (12) is thereby elastically deformed radially outward again in order to cancel the clamping of the pipe or of the hose (2) in the accommodating bore (6),
d) wherein the radially inner wedge section (8) is moulded directly to a wall (11) of the accommodating bore (6) and is constructed in one piece therewith,
e) wherein at least one sealing ring (26) is provided between a radially inner circumferential surface (36) of the accommodating bore (6) and a radially outer circumferential surface of the pipe or of the hose (2), said sealing ring lying opposite an end face of the clamping collet (12),
f) wherein, on a section projecting from the accommodating bore (6), the clamping collet (12) has a collar (24) which extends radially outward,
**characterised in that**
g) the sealing ring (26) is secured by a sleeve (28), which is inserted into the accommodating bore (6), and **in that**
h) the collar (24) is detachably connected to the clamping collet (12).

2. Detachable pneumatic pipe or hose connection according to claim 1, **characterised in that** the clamping collet (12) is slotted when viewed in an axial direction.

3. Detachable pneumatic pipe or hose connection according to claim 2, **characterised in that** the clamping collet has freely projecting clamping fingers (18) extending in an axial direction.

4. Detachable pneumatic pipe or hose connection according to one or more of the preceding claims, **characterised in that** the compressed-air-carrying body provided with the accommodating bore (6) is formed by a compressed-air device (4).

5. Detachable pneumatic pipe or hose connection according to one or more of the preceding claims, **characterised in that** releasable latching is provided between the clamping collet (12) and the wall (11) of the accommodating bore (6).

6. Detachable pneumatic pipe or hose connection according to one or more of the preceding claims, **characterised in that** defined passages are formed in the accommodating bore (6) and/or in the clamping collet (12) or in the sealing ring (26) in such a manner as to give rise to an air flow that produces an audible sound which indicates leaks.

7. Detachable pneumatic pipe or hose connection according to one or more of the preceding claims, **characterised in that** the sleeve (28) has, at the end facing the pipe or hose (2), a radially inner annular recess (30), the end face of which forms a stop for the pipe or hose (2).

8. Detachable pneumatic pipe or hose connection according to claim 9, **characterised in that** the sleeve (28) is installed into a smooth cylindrical section (36) of the accommodating bore by way of a screw joint.

## Revendications

1. Raccord pneumatique détachable pour tubes ou tuyaux (1) comprenant:
a) un corps (4) passant de l'air comprimé, ayant un alésage de réception (6) pour un tuyau passant de l'air comprimé ou un tube (2) passant de l'air comprimé, ledit alésage de réception (6) présentant un segment de clavette (8) radialement intérieur,
b) une douille de serrage (12) entourant ledit tuyau ou ledit tube (2), radialement élastique au moins en partie, qui présente un segment de clavette (14) radialement extérieur,
c) dans lequel ledit segment de clavette (14) radialement extérieur de ladite douille de serrage (12) coopère avec ledit segment de clavette (8) radialement intérieur dudit alésage de réception (6) d'une telle manière, qu'un mouvement axial de ladite douille de serrage (12) en un sens puisse serrer lesdits segments de clavette (8" 14) l'un contre l'autre, à déformation élastique de ladite douille de serrage (12), au moins en partie, radialement vers l'intérieur, afin de serrer ledit tube ou ledit tuyau (2) à friction et/ou de manière positive, et qu'un mouvement axial de ladite douille desserrage (12) en sens opposé puisse écarter lesdits segments de clavette (8, 14) l'un de l'autre, à ré-déformation élastique de ladite douille de serrage radialement vers l'extérieur, afin d'annuler le serrage dudit tube ou dudit tuyau (2) dans ledit alésage de réception (6),
d) dans lequel ledit segment de clavette (8) radialement intérieur st moulé directement à une paroi (11) dudit alésage de réception (6), en étant intégral avec le dernier,
e) dans lequel au moins une bague d'étanchéité (26) opposée à une surface de face de ladite douille de serrage (12) est disposée entre une surface périphérique radialement intérieure dudit tube ou dudit tuyau (6) et une surface périphérique radialement extérieure dudit tube ou dudit tuyau (2),
f) dans lequel ladite douille de serrage (12) présente une collerette (24) s'étendant radialement vers l'extérieur en saillie dudit alésage de réception (6),
**caractérisé en ce**
g) **que** ladite bague d'étanchéité (26) est bloqué par un contre-douille (28) insérée dans ledit alésage de réception (28), et
h) ladite collerette (24) est raccordée à ladite douille de serrage (12) de façon détachable.

2. Raccord pneumatique détachable pour tubes ou tuyaux selon la revendication 1, **caractérisé en ce que**, vue en sens axial, ladite douille de serrage (12) présente une fente.

3. Raccord pneumatique détachable pour tubes ou tuyaux selon la revendication 2, **caractérisé en ce que** ladite douille de serrage présente des doigts de serrage (18), qui s'étendent en sens axial en faisant librement saillie.

4. Raccord pneumatique détachable pour tubes ou tuyaux selon au moins une quelconque des revendications précédentes, **caractérisé en ce que** ledit corps passant de l'air comprimé, qui est muni dudit alésage de réception (6), est constitué par un dispositif de l'air comprimé (4).

5. Raccord pneumatique détachable pour tubes ou tuyaux selon au moins une quelconque des revendications précédentes, **caractérisé en ce qu'**un encliquetage détachable est formé entre ladite douille de serrage (12) et ladite paroi (11) dudit alésage de réception (6).

6. Raccord pneumatique détachable pour tubes ou tuyaux selon au moins une quelconque des revendications précédentes, **caractérisé en ce que** des passages définis dans ledit alésage de réception (6) et/ou dans ladite douille de serrage (12) ou dans ladite bague d'étanchéité (26) sont formés d'une telle façon, qu'un courant d'air soit produit qui engendre un son audible, qui est un indicateur des défauts d'étanchéité.

7. Raccord pneumatique détachable pour tubes ou tuyaux selon au moins une quelconque des revendications précédentes, **caractérisé en ce que** ladite douille (28) présente un creux (30) annulaire radialement intérieur à son extrémité dirigée vers ledit tube ou ledit tuyau (2), dont la surface de face forme un arrêt pour ledit tube ou ledit tuyau (2).

8. Raccord pneumatique détachable pour tubes ou tuyaux selon la revendication 9, **caractérisé en ce que** ladite douille (28) est insérée dans un segment (36) en cylindre lisse dudit alésage de réception via une connexion vissée.
